# EUROPEAN PATENT SPECIFICATION

(11) **EP 2 392 437 B1**
(45) Date of publication and mention of the grant of the patent: **20.03.2013**
(21) Application number: 11168503.8
(22) Date of filing: 01.06.2011
(51) Int. Cl.: B26D 3/16, B23B 5/16, B23D 21/10

(54) **Cutting/trimming hand tool for low thickness flexible tubes**
Handschneid-/-abschneidwerkzeug für Schläuche mit geringer Dicke
Outil manuel de découpe/finition pour tubes flexibles de faible épaisseur

(30) Priority: 01.06.2010 AR P100101918
(43) Date of publication of application: 07.12.2011
(73) Proprietor: Macroplast S.A., C1181ACT Buenos Aires (AR)
(72) Inventor: May, Christian Federico, C1181ACT Buenos Aires (AR)
(74) Representative: Intès, Didier Gérard André

(56) References cited:
- AR-A1- 054 547
- GB-A- 2 207 377

## Description

The present invention relates to a tubes cutting/trimming hand tool.

Documents JP 54061271, US 6129488, GB 732901, GB 1163621, GB 2019291, PL 159901, NL 8200402, US 4490909, EP 0515832, US 4243011, US 4402136, US 4856408, US 4625464, US 4845850, US 5020221, US 5020401, US 5081768, US 5349751, US 7029211, US 6918278, US 6666062, US 4689883, US 2001/0001935, US 2005/0015965, and WO 00/56494 disclose plastic tubes cutting tools, manual or otherwise, motorized or otherwise; trimming tools for plastic tubes ends trimming, manual or otherwise, motorized or otherwise; and motorized tools which simultaneously combine tubes cutting and trimming elements. However, none of them discloses a non-motorized hand tool combining both elements at the same time.

At present, non-motorized hand tools used for the installation of water distribution and drainage systems are considered a part of said systems, in the sense that a good tool may substantially improve a system performance, while a defective tool can deteriorate it.

At present, upon fitting a drainage system, a cutting tool and a trimming tool are used, generally not together.

Cutting tool is used along with a guide in order that the cut is as close as possible to 90°. Once the cut is done, the resulting burrs, waste and chips should be disposed of. Ends cleaning is done by means of a cutter or an emery sandpaper.

Trimming tool is then placed at the end of the tube which is to be beveled. Once the tool is placed, it is adjusted according to the diameter of the introduced tube and the tool is rotated.

The current manual cutting and trimming procedure exhibits the following drawbacks:
- cutting and trimming operations require several utensils;
- tube cutting at an angle of 90° is not assured, the risk being a resulting non-standard system;
- the cut is not clean, burrs always remaining;
- it is dangerous for the operator; and
- trimming tool is expensive, thus most works dispense with it and trimming is performed by means of rustic methods.

On the other hand, industry is aware of this kind of disadvantages and has sought to develop hand tools bearing both cutting devices. Some examples thereof follow.

Document GB 2207377 discloses a hand tool intended for plastic tubes cutting and trimming. This tool consists of a handle 17 from which a cutting element 20 is displaced, said element is pressed against the tube to be cut and/or trimmed by means of a spring. This tool uses a single "V" shaped cutting element for cutting and trimming purposes, handle 17 being rotated clockwise.

Document EP 1236529 discloses a hand tool able to be adjusted to several diameters of plastic tubes, said tool consisting of a tool holder 18 which includes a cutting element 22 and a trimming element 30 which is adjustable along the tool length by means of a pin.

Above mentioned tools bear a lot of pieces and are difficult to handle due to their great volume. Further, maintenance thereof is expensive and they require a skilled worker for their operation. Further, some of said tools tend to deform the tube during the cutting operation due to the great pressure exerted on the tube by the cutting blade, for example in the case of low thickness tubes such as those employed for drainage purposes. Also, many of such tools produce irregular cuts or bevels, making tube to tube connection difficult.

Considering the above drawbacks, it was necessary to improve available hand tools with both cutting and trimming elements. Applicant has developed a hand tool which allows simultaneous cutting and trimming of low thickness flexible plastic tubes, which nature far overcomes drawbacks exhibited by known cutting and trimming hand tools for plastic low thickness flexible tubes, attaining results which are similar to those of industrial mechanizing.

In order to obtain the tool according to the present invention. Applicant has taken a cutting tool for metal tubes as a starting point. Such tool consists of a "U" which bears on one of its ends a wheel for the tube to slide and on the other a blade like wheel.

When attempting this same operation on a plastic flexible tube of low thickness, Applicant observed that instead of obtaining a cut as the top knob was rotated in order to introduce the blade, the tube wall was flattened. Thus, Applicant concluded that the tool to be developed should have a containing element for the plastic tube. Trimming followed cutting and the flexible tube walls certain flattening had to be somehow avoided, precisely because it would exert a direct pressure against a thin end. To this end, Applicant developed a trimming tubular accessory which is inserted into the tube at the end to be trimmed, providing a stop to limit the insertion into the tube in order to obtain a correct trimming and also bulk to prevent flattening of the end of the tube.

Published application AR054547A1 of which the present is an addition, discloses a cutting/trimming hand tool for low thickness flexible plastic tubes, which tool comprises a sleeve consisting of a cylindrical portion and a crest, said cylindrical portion including a cavity wherein said flexible tubes are inserted and said crest including an opening and a longitudinal passage into which a longitudinal stem is inserted, said stem engages in a tiltable fashion a cutting tool to said sleeve in said opening, said cutting tool consisting of a flat bearing a rotary handle on its top end and which bottom end is a substantially flat base which includes both a cutting blade and a trimming blade; said hand tool further comprises a trimming tubular accessory consisting of at least two zones A and B separated by a protrusion which height is substantially equal to the tube thickness, said zone A being substantially mechanized to the tube internal diameter and said zone B being substantially mechanized to said cavity internal diameter, the external surface of zone B including at least one locking element which engages at least one slot exhibited on the periphery of said cavity.

While the cutting tool of the previous application solves the above problems, Applicant has developed the following improvements of said cutting tool, on the basis of the following:
- it includes a cutting blade which height may be adjusted via adjusting means by an average skilled worker. Said cutting blade has a "V" shape and adjustment of the height thereof is similar to that of a cutter blade. Cutting blade should enter the tube (transversal) and then, when it rotates, it should cut thickness thereof (longitudinal);
- modification of the surface of the bottom portion of the flat, curving it so that it follows the internal diameter of the cylindrical portion of the tool sleeve, producing in one of its ends a substantially right angle as regards the trimming blade;
- modification of the internal diameter of said cylindrical portion of the sleeve, which is no longer straight in order that the ends thereof thicken to a diameter which is more similar to that of the tube. Applicant has observed that when the internal diameter of the cylindrical portion is straight, more friction is generated upon the rotation of said plastic tube, mostly when the later exhibits an external maximum diameter as required by the corresponding standard. Consequently, when the ends of the cylindrical portion are thickened for their diameter thickness to approach that of the diameter of the tube, the later remains straight and (oval) deforming thereof during the cutting operation is prevented; and
- modification of the protrusion which separates zone A from zone B of said trimming tubular accessory, now consisting of a body defining a trimming stop which thickness should be such that the end of the cutting tool behind the trimming blade is stopped when the later contacts the tube, and which height will depend on the standard of said tube. Such trimming stop simultaneously cooperates with a small step formed on the trimming plane with respect to the internal surface of the sleeve cavity.

Accordingly, it is an object of the present application a cutting/trimming hand tool for low thickness flexible tubes, wherein:
- said cutting blade adopts a "V" shape and its height is adjustable via adjusting means;
- surface of the bottom end of said flat conforms a curved which cooperates with the external surface of the tube which is to be cut and/or trimmed;
- both ends of the internal diameter of cylindrical portion of said sleeve are thickened to a diameter which is substantially equal to the external diameter of the tube which is to be cut and/or trimmed;
said protrusion consists of a body defining a trimming stop, which thickness should be such that an end of the flat of the cutting tool stops against said trimming stop at the back of the trimming blade when this contacts the tube.

There follows a brief description of the Figures of the invention.
Figure 1 shows an exploded view of the inventive tool showing the "V" shaped cutting blade, and the curved base of the metal flat of the cutting tool.
Figure 2 is a side view of the inventive tool during the tube cutting operation with the "V" shaped cutting blade
Figure 3 depicts a section of the inventive tool during the tube cutting operation, wherein the modified internal diameter of the cylindrical portion may be observed.
Figure 4 is a side view of the inventive tool during the tube trimming operation.
Figure 5 depicts a section of the inventive tool during the tube trimming operation, wherein the trimming stop may be observed.
Figure 6 depicts a tube being cut with the "V" shaped cutting blade.
Figure 7 illustrates trimming of a tube end with the trimming stop.

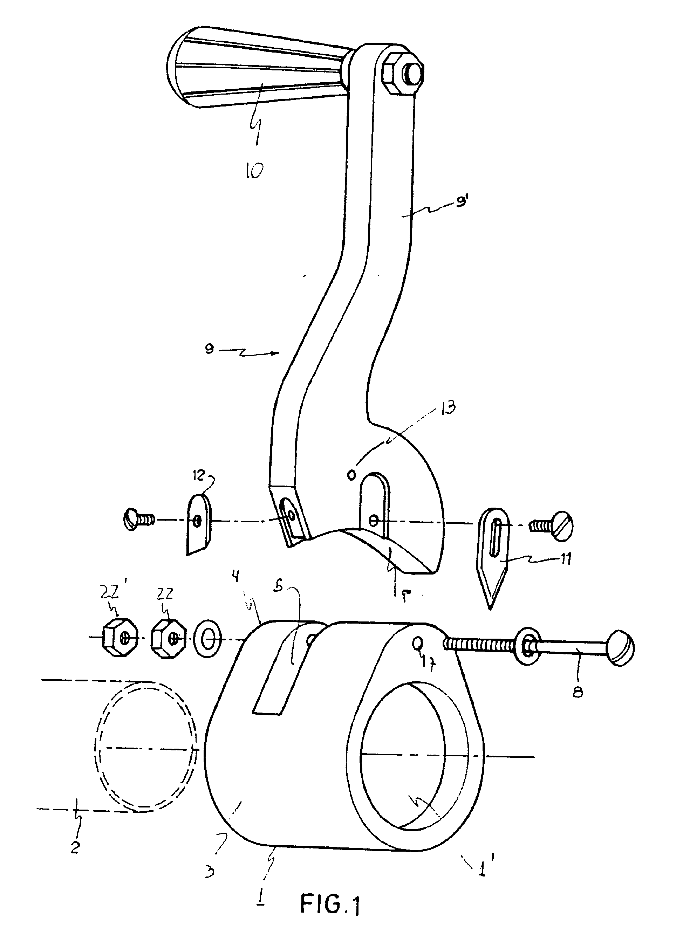

Figure 1 illustrates a preferably metallic sleeve 1, consisting of a cylindrical portion 3 and a crest 4. Said cylindrical portion 3 includes a cavity 1' into which flexible tube 2 to be cut and/or trimmed is inserted. Interval diameter of both ends E of said cavity 1' is thickened to a diameter which is substantially equal to the external diameter of flexible tube 2, which preferably should not exceed 160 mm. In this way, straightness of flexible tubes 2 is maintained, thus preventing oval deformation thereof upon the cutting operation. Those tubes with larger external diameters would be difficult to handle with the inventive tool, due to the fact that the manual cutting difficulty increases as the tubes external diameters increase. Crest 4 has an opening 5 which is perpendicular to the longitudinal axis of sleeve 1 at a certain distance of one of the ends of said sleeve 1, in relation with a trimming tubular accessory which shall be mentioned below.

In turn, said crest 4 bears an horizontal passage 7 along all of sleeve 1, same is crossed by a longitudinal stem 8, as for example a through-screw, which threaded ends project outwards from said passage 7. Both threaded ends bear nuts and set nuts 22, 22' in order to attach said through-screw to sleeve 1.

On the other hand, a cutting tool 9 is associated to said sleeve 1 in said opening 5, by means of a pivotal point and in a tilting fashion, said pivotal point consisting of a central orifice 13 at the bottom end of said tool 9, through which orifice there passes said through screw 8. Opening 5 is configured in such a way that it allows anchorage of cutting tool 9 without friction.

Cutting tool 9 is preferably comprised of a metallic flat 9', which acts as a lever arm in order to cut and/or trim said flexible tube 2. Top edge of said flat 9' includes a rotary handle 10 which is operated by worker. Bottom edge of said flat 9' comprises a curved base P which follows external diameter of flexible tube 2. One of the ends of said curved base P bears a trimming blade 12 which forms a substantially right angle with said curved base P and with external surface 18 of a trimming tubular accessory 15 as explained below. Bottom end of said flat 9' also includes a cutting blade 11, attached by any known engagement means, as for example screwing, said cutting blade adopting the shape of a "V", which height is adjustable through adjustment means (in this case a guiding slot) and protrudes from said curved base, and a trimming blade 12 attached to and projecting from one of the sides of said bottom end. Said cutting blade 11 and trimming blade 12 oppose each other on said base as regards the pivotal point.

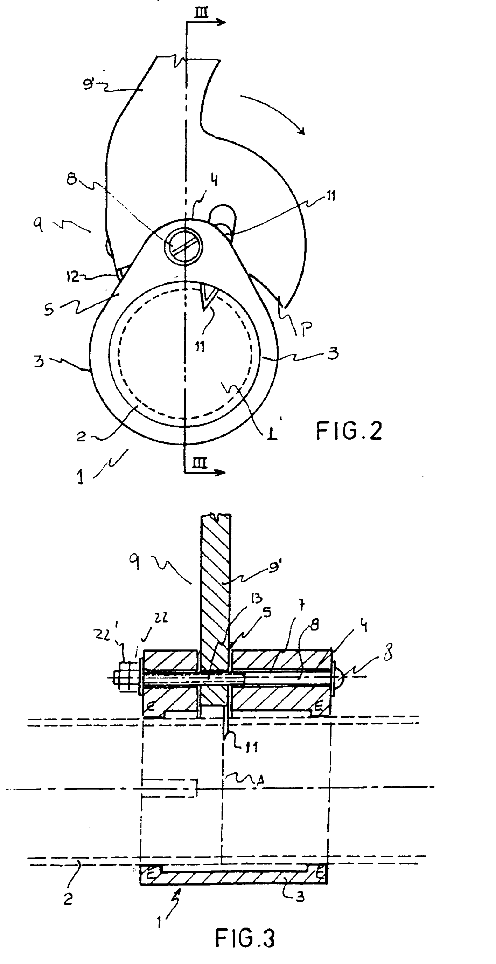

As shown by said Figure 2, cutting blade 11 performs a gradual cut. During the cutting operation, cutting blade 11 should transversally penetrate flexible tube 2, and upon rotation of cutting tool 9, it should longitudinally cut thickness of flexible tube 2. Usually, cutting blade 11 should penetrate tube 2 -which is shown in dotted lines- from 0.1 mm to 0.5 mm, this range depending on the thickness-diameter ratio of tube 2. Due to the curved configuration of base P of metallic flat 9' and height adjustment of cutting blade 11, this penetration limit is now defined by the opening 5 limit.

As depicted by Figure 3, depth of cut made by cutting blade 11 in cut zone A is slightly larger than tube 2 thickness. Particularly in the case of 160 mm diameter tubes, cut depth should be of 25 mm.

Cutting precision depends on the external diameter of tube 2/length of cavity 1' ratio and the space existing between said tube 2 and said cavity 1' depends on the external diameter of tube 2/internal diameter of said cavity 1' ratio, the later being thicker at ends E. In other words, the larger the space, the larger should be the length of cavity 1', and vice versa. Said space ranges from 0.001 mm to 2.5 mm. Length of cavity 1' ranges from 10 mm, this being the technical limit, and 100 mm, this being the economical limit.

Consequently, main function of cavity 1' is the contention of tube 2 in order to prevent deformation thereof during the cutting operation. This function has been improved due to the thickening of ends E of said cavity 1' to a diameter that more approaches that of external diameter of flexible tube 2.

Cutting process is very simple: flexible tube 2 is introduced into cavity 1'. Desired cutting zone is placed just beneath opening 5. One hand holds tube 2 and the other rotates tool 9 with rotary handle 10. During rotation of cutting tool 9, cavity 1', with its thickened ends E, supports tube 2 in such a way that it can not rotate. Worker may even help with his hand. Cutting tool 9 is rotated one or two turns, as due to the above mentioned cutting conditions, upon a first turn 70% of tube 2 thickness is cut, and 100% during a second turn.

During cutting action of tube 2, trimming blade 12 does not contact it.

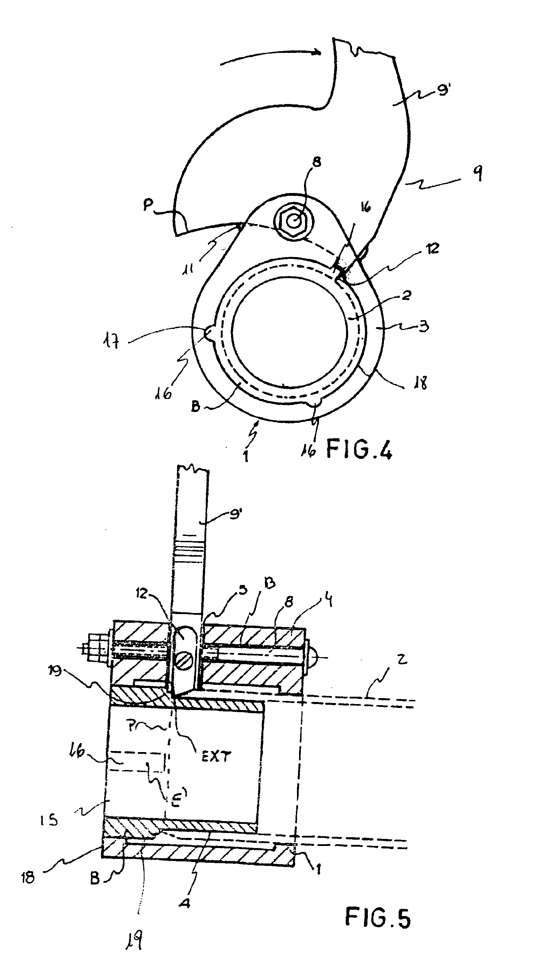

With reference to Figure 4, and as previously mentioned, one of the ends of the curved base of flat 9' of cutting blade tool 9 bears trimming blade 12, which projects from one of its sides. Usually trimming blades 12 have an angle of attack of 15°, but in the case of the present additional patent, same should be substantially right, according to the substantially curved base P of flat 9' of cutting tool 9. In order to carry out the trimming operation with the inventive tool a tubular accessory is required which we will call tubular trimming accessory 15, with which external surface 18 trimming blade 12 also forms a substantially right angle. Figure 5 also shows a side section of said trimming tubular accessory 15. One of the ends of said accessory 15, which we will call zone A, is substantially mechanized to the internal diameter of tube 2 which is to be trimmed. Opposed end, which we will call zone B, is substantially mechanized to the internal diameter of cavity 1'_{.} In other words, diameter of said zone B is equal or slightly larger than the external diameter of tube 2. Both zones A and B are separated by a projection 19 consisting of a body which defines a trimming stop, wherein thickness thereof should be such that an EXT end of cutting tool 9 will abut against said trimming stop 19 behind the trimming blade 12 when this contacts tube 2, and which height will depend on said tube 2 standard. Said trimming stop 19 simultaneously cooperates with a small step E' formed on the trimming plane P with respect to the internal surface of cavity 1' of sleeve 1, as described below.

External surface 18 of zone B of said accessory 15 includes at least one locking element 16 which engages at least one slot 17 exhibited on the periphery of said cavity 1' in order to secure position of said accessory 15 inside said cavity 1'. Figure 4 illustrates three locking elements 16 respectively placed into three slots 17, this, however, is not to be considered a limitation herein. Shapes adopted by said locking elements 16 may vary, particularly, they may adopt the shape of crests as noted in the preferred embodiment example.

Slots 17 extend from the edge of said cavity 1' to the trimming plane P, as shown by Figure 5. In that place a step E' is formed with respect to internal surface of cavity 1' of sleeve 1, which acts like a stop for the insertion of trimming tubular accessory 15. Further, fitting of locking means into slots 17 prevents undesirable rotation of the trimming tubular accessory 15 during cutting operation.

Length of said slots 17 determines length of locking means 16, and more specifically length of zone B of said accessory 15. Particularly, and depending on the diameter of tube 2 to be trimmed, a predetermined portion of zone B extends under opening 5 where trimming blade 12 is positioned.

As previously seen, once the trimming tubular accessory 15 is inserted, the end of tube 2 is inserted into zone A of said accessory 15. Tube 2 starts occupying the coaxial space remaining between trimming tubular accessory 15 and internal diameter of cavity 1', until it contacts trimming stop 19, the external surface of said tube 2 then being flush with the external surface of zone B of said accessory 15. In order to attain a good trimming, in this case, as previously noted, it will be necessary to have a substantially right angle of attack for trimming blade 12 respecting trimming tubular accessory 15, and at the end curved base P of flat 9' where said trimming blade 12 is placed, trimming lengths ranging from 3.5 mm to 6 mm and trimming heights ranging from 1.8 mm to 3.9 mm according to the different diameters of tubes 2 which, in the case of this tool, range from 32 mm to 160 mm. Trimming height portion, from the point in which the trimming slope changes into vertical so that the edge is not sharp, to the internal diameter of tube 2 ranges from 0.86 mm to 2.30 mm. On the other hand, trimming blade 12 trimming length ranges from 3.5 mm to 10 mm in order to allow trimming of above mentioned different diameter tubes.

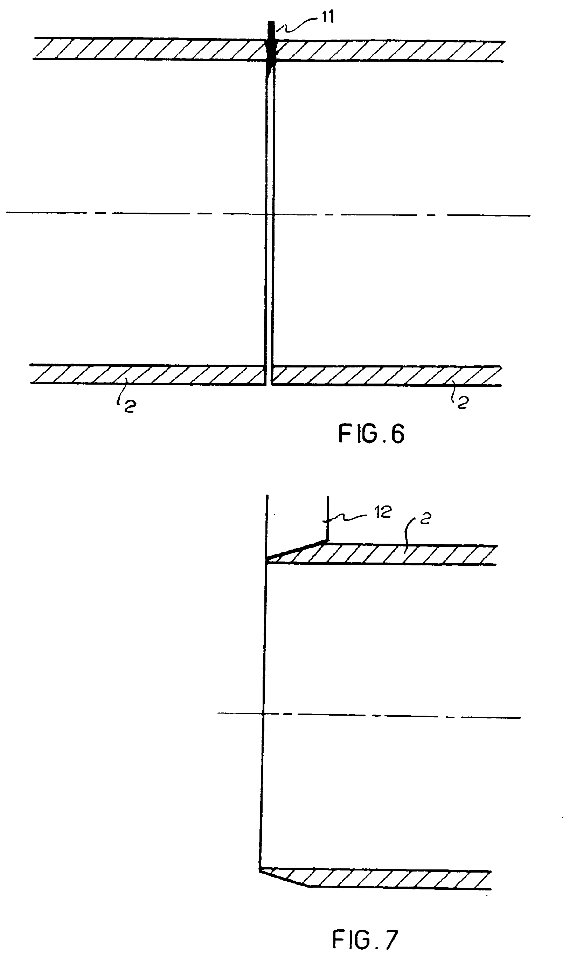

Trimming is accomplished by rotating tool in a sense opposite to that of cutting. During the trimming operation, cutting blade 11 does not contact end of tube 2 to be trimmed. Detail of a tube 2 cut by means of a cutting blade 11, and of trimming of a tube 2 by means of a trimming tool 12 is shown by Figures 6 and 7 respectively.

## Claims

1. A hand tool for cutting and trimming of low thickness flexible plastic tubes (2), comprising
a sleeve (1) consisting of a cylindrical portion (3) and a crest (4), said cylindrical portion (3) including a cavity (1') wherein said flexible tubes (2) are inserted and said crest (4) including an opening (5) and
a longitudinal passage into which a longitudinal stem (8) is inserted, said stem (8) engages in a tiltable fashion a cutting tool (9) to said sleeve (1) in said opening (5), said cutting tool (9) consisting of a flat (9') bearing a rotary handle (10) on its top end and which bottom end is a substantially flat base which includes both a cutting blade (11) and a trimming blade (12);
said hand tool further comprises a trimming tubular accessory (15) consisting of at least two zones A and B separated by a protrusion (19) which height is substantially equal to the tube (2) thickness, said zone A being substantially mechanized to the tube (2) internal diameter and said zone B being substantially mechanized to said cavity (1') internal diameter, the external surface of zone B including at least one locking element (16) which engages at least one slot (17) exhibited on the periphery of said cavity (1')
**characterized in that**:
- said cutting blade (11) adopts a "V" shape and its height is adjustable via adjusting means;
- surface of the bottom end of said flat (9') conforms a curved base (P) which cooperates with the external surface of the tube (2) which is to be cut and/or trimmed;
- both ends (E) of the internal diameter of the cylindrical portion (3) of said sleeve (1) are thickened to a diameter which is substantially equal to the external diameter of the tube (2) which is to be cut and/or trimmed; and
said protrusion (19) consists of a body defining a trimming stop, which thickness should be such that an end (EXT) of the flat (9') of the cutting tool stops against said trimming stop (19) at the back of the trimming blade (12) when this contacts tube (2).

2. Hand tool according to claim 1, **characterized in that** said trimming stop (19) simultaneously cooperates with a small step (E') formed on the trimming plane (P) with respect to the internal surface of the sleeve (1) cavity (1').

3. Hand tool according to claim 1 or 2, **characterized in that** trimming blade (12) forms a substantially right angle with the end of curved base (P) of said flat (9') where it is arranged and with respect to the external surface (18) of said trimming tubular accessory (15).

4. Hand tool according to any one of claims 1 to 3, **characterized in that** trimming stop (19) height depends on the standard corresponding to said tube (2).

## Patentansprüche

1. Handwerkzeug zum Schneiden und Anfasen von flexiblen Kunststoffschläuchen (2) mit geringer Dicke, umfassend
eine Manschette (1), die aus einem zylindrischen Abschnitt (3) und einer Kuppe (4) besteht, wobei der zylindrische Abschnitt (3) einen Hohlraum (1') umfaßt, in den die flexiblen Schläuche (2) eingeführt werden, und die Kuppe (4) eine Öffnung (5) umfaßt,
und
einen Längsdurchgang, in den ein Längsbolzen (8) eingeführt wird, wobei der Bolzen (8) in einer kippbaren Weise ein Schneidewerkzeug (9) mit der Manschette (1) in der Öffnung (5) befestigt, wobei das Schneidewerkzeug (9) aus einem Flachstück (9') besteht, das einen Drehgriff (10) an seinem oberen Ende trägt und dessen unteres Ende eine im wesentlichen flache Basis ist, die sowohl eine Schneidklinge (11) als auch eine Anfasklinge (12) umfaßt,
wobei das Handwerkzeug ferner ein röhrenförmiges Anfashilfsteil (15) umfaßt, das aus wenigstens zwei Zonen A und B besteht, die durch einen Vorsprung (19) getrennt sind, dessen Höhe im wesentlichen gleich der Dicke des Schlauches (2) ist, wobei die Zone A im wesentlichen an den inneren Durchmesser des Schlauches (2) angepaßt ist und die Zone B im wesentlichen an den inneren Durchmesser der Aussparung (1') angepaßt ist, wobei die äußere Oberfläche der Zone B wenigstens ein Sperrelement (16) umfaßt, das wenigstens einen Schlitz (17), der auf dem Umfang des Hohlraums (1') vorgesehen ist, belegt,
**dadurch gekennzeichnet, daß**
- die Schneidklinge (11) eine V-Form besitzt und ihre Höhe mittels Einstellmitteln einstellbar ist,
- eine Oberfläche des unteren Endes des Flachstücks (9') eine gebogenen Basis (P) aufweist, die mit der äußeren Oberfläche des Schlauches (2) kooperiert, der zu schneiden und/oder zu trimmen ist,
- beide Enden (E) des inneren Durchmessers des zylindrischen Abschnittes (3) der Manschette (1) auf einen Durchmesser verdickt sind, der im wesentlichen gleich dem äußeren Durchmesser des Schlauches (2) ist, der zu schneiden und/oder anzufasen ist, und
- der Vorsprung (19) aus einem Körper besteht, der einen Anfasanschlag definiert, dessen Dicke so bemessen sein sollte, daß ein Ende (EXT) des Flachstücks (9') des Schneidwerkzeugs gegen den Anfasanschlag (19) an der Rückseite der Anfasklinge (12) anschlägt, wenn diese den Schlauch (2) kontaktiert.

2. Handwerkzeug nach Anspruch 1, **dadurch gekennzeichnet, daß** der Anfasanschlag (19) gleichzeitig mit einem kleinen Absatz (E'), der auf der Anfasebene (P) in bezug zu der inneren Oberfläche des Hohlraums (1') der Manschette (1) ausgebildet ist, kooperiert.

3. Handwerkzeug nach Anspruch 1 oder 2, **dadurch gekennzeichnet, daß** die Anfasklinge (12) einen im wesentlichen rechten Winkel mit dem Ende der gebogenen Basis (P) des Flachstücks (9') bildet, wo sie angeordnet ist, und in bezug zu der äußeren Oberfläche (18) des röhrenförmigen Anfashilfsteils (15).

4. Handwerkzeug nach einem der Ansprüche 1 bis 3, **dadurch gekennzeichnet, daß** die Höhe des Anfasanschlags (19) von dem Standard abhängt, der dem Schlauch (2) entspricht.

## Revendications

1. Outil manuel de découpe et de finition pour tubes en plastique flexibles (2) de faible épaisseur, comprenant
un manchon (1) consistant en une partie cylindrique (3) et une crête (4), ladite partie cylindrique (3) comprenant une cavité (1') dans laquelle lesdits tubes flexibles (2) sont insérés et ladite crête (4) comprenant une ouverture (5), et
un passage longitudinal dans lequel une tige longitudinale (8) est insérée, ladite tige (8) mettant en prise, d'une manière inclinable, un outil de découpe (9) sur ledit manchon (1) dans ladite ouverture (5), ledit outil de découpe (9) consistant en un plateau (9') supportant une poignée rotative (10) sur son extrémité supérieure et dont l'extrémité inférieure est une base sensiblement plate qui comprend à la fois une lame de découpe (11) et une lame de finition (12) ;
ledit outil manuel comprend en outre un accessoire tubulaire de finition (15) consistant en au moins deux zones A et B séparées par un épaulement (19) dont la hauteur est sensiblement égale à l'épaisseur du tube (2), ladite zone A étant sensiblement usinée au diamètre interne du tube (2) et ladite zone B étant sensiblement usinée au diamètre interne de ladite cavité (1'), la surface externe de la zone B comprenant au moins un élément de blocage (16) qui s'engage dans au moins une fente (17) située à la périphérie de ladite cavité (1'),
**caractérisé en ce que**:
- ladite lame de découpe (11) a une forme en « V » et sa hauteur est ajustable via des moyens d'ajustement ;
- la surface de l'extrémité inférieure dudit méplat (9') forme une base incurvée (P) qui coopère avec la surface externe du tube (2) qui doit être coupé et/ou fini ;
- les deux extrémités (E) du diamètre interne de la partie cylindrique (3) dudit manchon (1) sont épaissies jusqu'à un diamètre qui est sensiblement égal au diamètre externe du tube (2) qui doit être découpé et/ou fini ; et ledit épaulement (19) consiste en un corps définissant une butée de finition dont l'épaisseur doit être telle qu'une extrémité (EXT) du plateau (9') de l'outil de découpe s'arrête contre ladite butée de finition (19) à l'arrière de la lame de finition (12) lorsque cette dernière entre en contact avec le tube (2).

2. Outil manuel selon la revendication 1, **caractérisé en ce que** ladite butée de finition (19) coopère simultanément avec une petite marche (E') formée sur le plan de finition (P) par rapport à la surface interne de la cavité (1') du manchon (1).

3. Outil manuel selon la revendication 1 ou 2, **caractérisé en ce que** la lame de finition (12) forme un angle sensiblement droit avec l'extrémité de la base incurvée (P) dudit plateau (9') lorsqu'elle est agencée et par rapport à la surface externe (18) dudit accessoire tubulaire de finition (15).

4. Outil manuel selon l'une quelconque des revendications 1 à 3, **caractérisé en ce que** la hauteur de la butée de finition (19) dépend de la norme correspondant audit tube (2).
